(19) Europäisches Patentamt
European Patent Office
Office européen des brevets

(11) **EP 1 746 785 A1**

(12) **EUROPEAN PATENT APPLICATION**

(43) Date of publication:
24.01.2007 Bulletin 2007/04

(51) Int Cl.:
*H04L 12/56* (2006.01)   *H04L 12/28* (2006.01)
*H04L 1/20* (2006.01)

(21) Application number: 05254550.6

(22) Date of filing: 21.07.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicant: **STMicroelectronics (Research &**
**Development)**
**Limited**
**Marlow,**
**Buckinghamshire SL7 1YL (GB)**

(72) Inventor: **Oakes, Ivan,**
**c/o STMicroelectronics Ltd.**
**Theale**
**Reading**
**Berkshire RG6 4SAgb1 (GB)**

(74) Representative: **Frost, Alex John**
**Boult Wade Tennant,**
**Verulam Gardens**
**70 Gray's Inn Road**
**London WC1X 8BT (GB)**

(54) **A network device and method for selecting a transmit rate for transmitting over a**
**communication channel**

(57)    A network device comprising a transmitter for transmitting messages over a communication channel; a processor for determining a number of transmit failures over the communication channel based on a number of messages received in acknowledgement of the transmitted messages, for determining a probability of collision over the communication channel, and for deriving a number of transmit failures over the communication channel resulting from communication channel link quality based on the determined number of transmit failures and the probability of collision over the communication channel; and a selector for selecting a transmit rate over the communication channel based on the derived number of transmit failures over the communication channel resulting from communication channel link quality.

Fig. 1

**Description**

The present invention relates to a network device and a method for selecting a transmit rate over a communication channel.

Since the success of the Ethernet project at Xerox's Palo Alto Research Centre in the early 1970's network technology use has blossomed with a variety of different network standards having been proposed and adopted. The fundamental aim of each standard being to provide a mechanism to provide multiple access for different network nodes for the same communication medium.

Although initial networking technology was based upon a wired communication medium, over recent years wireless networking communication has enjoyed tremendous growth. As such, current networking standards are not only required to address a plurality of different multiple access schemes but are also required to address different communication medium types for both wired and wireless networks.

One popular medium access scheme that provides a simple and cost effective solution that also allows automatic medium sharing in an asynchronous manner is carrier sense medium access with collision avoidance CSMA/CA, in which the same network medium is used to communicate with by a plurality of network nodes. By way of illustration, a CSMA network device (e.g. network node) that receives a packet for transmission over a network listens to the network medium (i.e. communication channel or link) to ensure that no other network nodes are transmitting. If the communication channel is clear the CSMA device then transmits the packet, if the communication channel is busy the CSMA device waits a random time period before transmitting, thereby minimising the possibility of collisions with data being transmitted by another network node over the communication channel. As such, the ability to communicate over a CSMA based network will depend, in part, upon how much communication traffic is being transmitted over the communication channel for all network nodes.

Additionally, certain network standards, for example the 802.11 wireless network standard, allow variable transmit rates, where the transmit rate selected by a network device will ideally be dependent upon the communication channel conditions applicable at any given time. As such, for a network that can support multiple bit rates (i.e. transmit rates) the throughput achieved over the network communication channel will be a function of bit rate and delivery probability. For example, higher bit rates allow high quality links to transmit more data, but provide low throughput on lossy communication channels. Lower bit rates, in general, have a lower loss probability than higher bit rates on low quality links.

To allow an appropriate transmit rate to be selected transmit rate selection algorithms are typically used, where a transmit rate selection algorithm will typically use the past history of transmit successes or failures to determine a new transmit rate (e.g. if all previous transmissions have been received successfully this could be used as an indication that the current transmission bit rate is slower than it needs to be).

For example, for the 802.11 wireless communication standard, in which received messages are acknowledged by the transmission of an acknowledgement message from the receiving node to the transmitting node, received acknowledgement messages can be used by a transmitting node to determine the number of transmit successes and consequently be used as a measure of communication channel link quality and accordingly used to determine an appropriate transmit rate.

However, in the case of a CSMA compliant network having a variable transmit rate the failure of a transmission can occur due to two independent and separate reasons: 1) from poor communication channel link quality and 2) from the collision of multiple packets transmitted over the communication channel at the same time. As such, the use of acknowledgment messages, without further qualification, can lead to the selection of non-optimum transmit rates.

It is desirable to improve this situation.

In accordance with an aspect of the present invention there is provided a network device and a method for selecting a transmit rate for transmitting over a communication channel according to the accompanying claims.

This provides the advantage of allowing the number of transmit failures resulting from the collision of packets to be isolated from the number of transmit failures resulting from poor communication link quality and therefore allow a transmit rate for communicating over a communication channel to be selected based more accurately upon, if required, the communication channel link quality.

An embodiment of the invention will now be described, by way of example, with reference to the drawings, of which:

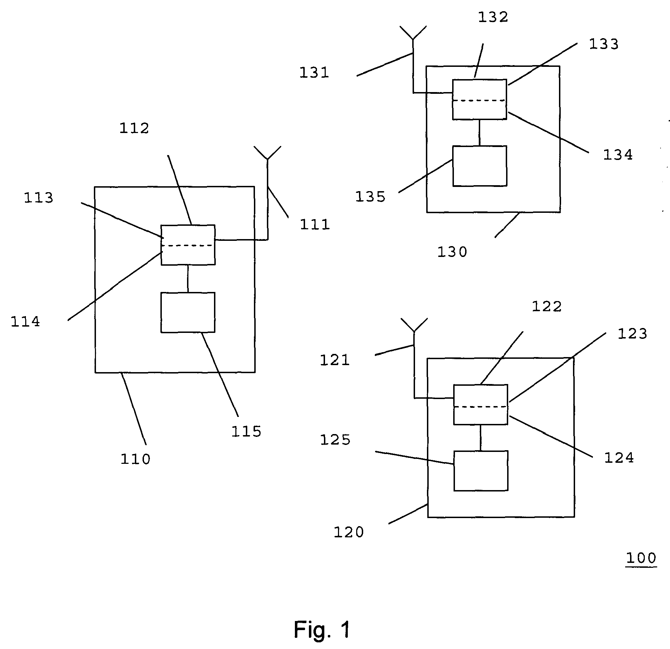

Figure 1 illustrates an wireless network having a network node in accordance with an aspect of the present invention.

Figure 1 shows a wireless communication local area network 100 arranged to operate in accordance with the 802.11 network standard, however other CSMA based networks could be used, for example the HomePLug and HomeRF network systems.

The wireless communication network 100 includes a first wireless communication device 110 (i.e. a first network node), a second wireless communication device 120 (i.e. a second network node), and a third wireless communication device 130 (i.e. a third network node) that are arranged to form a local area network.

Although the current embodiment illustrates, for simplicity, a local area network having three network nodes, as a person skilled in the art would appreciate, the local area network could be configured to have any suitable number of network nodes.

As shown in figure 1, the first network node 110 includes an antenna 111 coupled to a transceiver 112 (i.e. a transmitter 113 and receiver 114), with the transceiver 112 being coupled to a processor 115. Corresponding both the second 120 network node and third network node 130 also have a respective antenna 121, 131 coupled to a transceiver 122, 132 (i.e. a transmitter 123, 133 and receiver 124, 134), with their respective transceivers 122, 132 being coupled to a processor 125, 135. The respective transceivers 112, 122, 132 and processors 115, 125, 135 for the first, second and third network nodes 110, 120, 130 are arranged to operate in accordance with the 802.11 standard and, as such, define the various OSI layers as required by the 802.11 standard, for example both the physical layer and medium access control layer, as described below.

Each of the network nodes 110, 120, 130 will typically include other well known features, for example an input device (not shown), which are well known to a person skilled in the art and as such will not be describe any further for the purposes of the present embodiment.

The respective processors 115, 125, 135 and transceivers 112, 122, 132 of the first, second and third network nodes 110, 120, 130 are arranged to transmit and receive messages/packets via a wireless communication channel as defined in the 802.11 standard, as is well known to a person skilled in the art

In accordance with the 802.11 standard, as stated above, the first network node 110, the second network node 120, and the third network node 130 incorporate a physical layer (i.e. the transceivers 112, 122, 132) that is arranged to allow the transmission of variable bit rates, where each bit rate uses a particular modulation scheme to transfer a data stream into a sequence of symbols, which are encoded by changes in amplitude, phase, or frequency, or combination of these, of an analog signal, as is well known to a person skilled in the art.

By way of illustration table 1 below provides a summary of the modulation schemes associated with the bit rates used in 802.11. Additionally, table 1 provides information on how a signal is placed on a channel, that is to say as to whether direct sequence spread spectrum DSSS or orthogonal frequency division multiplexing OFDM is to be used.

TABLE 1

| bit-rate Mbps | 802.11 standard | DSSS or OFDM | Modulation |
|---|---|---|---|
| 1 | b/g | DSSS | BPSK |
| 2 | b/g | DSSS | QPSK |
| 5.5 | b/g | DSSS | CCK |
| 11 | b/g | DSSS | CCK |
| 6 | a/g | OFDM | BPSK |
| 9 | a/g | OFDM | BPSK |
| 12 | a/g | OFDM | QPSK |
| 18 | a/g | OFDM | QPSK |
| 24 | a/g | OFDM | QAM-16 |
| 36 | a/g | OFDM | QAM-16 |
| 48 | a/g | OFDM | QAM-16 |
| 54 | a/g | OFDM | QAM-16 |

As can be seen from table 1, in accordance with the 802.11 standard the three network nodes 110, 120, 130 have a plurality of bit rates available for transmitting data over the communication channel.

In accordance with the 802.11 standard the first network node 110, the second network node 120 and the third network node 130 have a medium access control MAC layer (not shown) in which the basic network medium access method is the distributed coordination function DCF, as defined by the CSMA/CA MAC protocol.

In accordance with the DCF, before initiating transmission a network node 110, 120, 130 senses (i.e. samples) the communication channel (i.e. communication medium) established between the first, second and third network nodes 110, 120, 130 to determine whether another network node is transmitting.

Before transmission, the network node chooses a random interval, otherwise known as a back-off interval, which is used to initialise a back-off timer (not shown).

The back-off timer is decreased for as long as the channel is sensed (i.e. sampled) to be idle but the timer is stopped when a transmission is detected on the channel and reactivated when the channel is sensed as idle again for more than a distributed interframe space DIFS. The network node is arranged to transmit when the back-off timer reaches zero.

The specific back-off technique adopted by the DCF is known as the slotted binary exponential back-off technique in which the time immediately following an idle DIFS is slotted, and a network node is allowed to transmit only at the beginning of each slot time, which is sufficient time for any network node to detect the transmission of a packet from any other network node and change from receive to transmit mode. The back-off time is uniformly chosen in an interval known as the back-off window (i.e. contention window). At the first attempt to transmit a message the contention window (i.e. the back-off interval or back-off window) is set to a minimum value (i.e. CW=CWmin). If the transmission fails (e.g. due to collision with another transmission) the contention window is doubled for each retransmission up to a maximum value.

As stated above, successful reception of a transmitted packed is acknowledged with an acknowledgement message transmitted from the receiving node to the transmitting node. This is accomplished by the receiver initiating the transmission of the acknowledgment message after a short interframe space SIFS, which is less than the DIFS.

If an acknowledgement is not received, the data frame is presumed to have been lost, for example due to collision with another packet or due to poor channel conditions, and a retransmission is scheduled.

The following specific description is based upon the first network node 110 being arranged to select a transmit rate in accordance with the present invention, however, as would be appreciated by a person skilled in the art, this description could apply equally to some or all of the other network nodes 120, 130.

The first network node 110 is arranged to store the total number of messages transmitted Nt by the transmitter113 for a given time period in a memory (not shown) along with the number of associated acknowledgment messages Na received by the receiver 114.

The processor 115 is arranged to determine the number of transmit failures Nf by subtracting the number of received acknowledgement messages from the total number of messages transmitted, as shown in equation 1) below.

$$Nf = Nt - Na \hspace{4cm} 1)$$

As stated above, the number of transmit failures will include transmission failures occurring as a result of both collisions with other transmissions and poor communication channel quality (i.e. poor communication channel link quality). Examples of conditions that cause deterioration in link quality are fading and multipath interference, as is well known to a person skilled in the art.

To isolate the number of transmission failures that probably occurred as a result of collisions with other transmissions the processor is arranged to calculate a probability value for the likelihood that a collision will occur when transmitting over the communication channel.

For the purposes of the present embodiment the probability of a collision occurring is calculated by first determining the total number of slots sampled Ns within the contention window during the back-off period.

As stated above, the total number of slots sampled Ns will be a combination of the number of slots that normally would be sampled during the back-off period (i.e. Nb) plus the additional slots when back-off was suspended due to the detection of a signal in a slot (i.e. Nd). From this value a collision ratio CR can be calculated by dividing the total number of slots sampled by the number of slots sampled during the back-off period, as shown in equation 2) below.

$$CR = Ns/Nb = (Nb+Nd)/Nb \hspace{3cm} 2)$$

With the collision ratio calculated the processor 115 is arranged to determine a collision probability CP, for example by using an averaging method (see equation 3 below), as is well known to a person skilled in the art.

$$PC = Average(CR) \qquad\qquad 3)$$

It should be noted, however, that any suitable form of collision probability could be used to isolate the number of transmission failures that probably occurred as a result of collisions with other transmissions.

With the calculated probability of collision PC the processor 115 is arranged to calculate the number of transmit failures that occurred due to collisions by multiplying the probability of collision PC with the number of transmit failures Nf. The processor 115 is then arranged to calculate a corrected number of transmit failures resulting from communication channel link quality Nfc by subtracting the calculated number of transmit failures occurring from collisions with other transmission from the total number of transmit failures Nf, as shown in equation 4) below.

$$Nfc = Nf - Nf.PC \qquad\qquad 4)$$

The corrected number of transmit failures Nfc that resulted from communication channel link quality can then be input into a selector (not shown), which includes a transmit rate selection algorithm, to determine a transmit rate from the available transmit rates, as shown in table 1, based upon communication channel link quality. It should be noted that the selector is a logical element, which for the purposes of the present embodiment forms part of the processor 115.

As the likelihood that transmit failures occurring as a result of collisions with other transmission and from communication channel link quality vary inversely with respect to each other for varying bit rates (i.e. as bit rates decrease transmission times increase, thereby increasing the likelihood of a collision but reducing the likelihood of failures resulting from poor link quality; as bit rates increase transmission times decrease, thereby decreasing the likelihood of a collision but increasing the likelihood of failures resulting from poor link quality) the transmit rate selection algorithm could be arranged to determine a transmit rate taking into account both the corrected number of transmit failures Nfc and the number of transmit failures occurring from collisions.

## Claims

1. A network device (110) comprising a transmitter (113) for transmitting messages over a communication channel; a processor (115) for determining a number of transmit failures over the communication channel based on a number of messages received in acknowledgement of the transmitted messages, **characterised by** the processor being arranged to determine a probability of collision over the communication channel, and for deriving a number of transmit failures over the communication channel resulting from communication channel link quality based on the determined number of transmit failures and the probability of collision over the communication channel; and a selector for selecting a transmit rate over the communication channel based on the derived number of transmit failures over the communication channel resulting from communication channel link quality.

2. A network device (110) according to claim 1, wherein the processor (115) is arranged to determine the number of transmit failures by subtracting the number of received acknowledgement messages from the number of transmitted messages.

3. A network device (110) according to claim 1 or 2, wherein the processor (115) is arranged to determine the number of transmit failures resulting from communication channel link quality by subtracting the multiplication of probability of collision with the number of transmit failures from the number of transmit failures.

4. A network device (110) according to any preceding claim, wherein the processor (115) is arranged to determine the probability of collision by sampling a number of timeslots in a communication channel, determining a collision ratio associated with the communication channel based upon the number of sampled time slots and the number of sampled time slots in which communication activity was detected over the communication channel and averaging the collision ratio over time.

5. A network device (110) according to any preceding claim, wherein the selector is arranged change to a selected transmit rate by changing a modulation scheme being applied to transmitted data.

**6.** A network device (110) according to any preceding claim, wherein the selector is arranged to select a transmit rate of one of 1, 2, 5.5, 6, 9, 11, 12, 18, 24, 36, 48 or 54 Mbps based on the derived number of transmit failures over the communication channel resulting from communication channel link quality.

**7.** A network device (110) according to any preceding claim, wherein the communication channel is a wireless communication channel.

**8.** A network device (110) according to any preceding claim, wherein the communication channel is a shared communication channel.

**9.** A network device (110) according to any preceding claim, wherein the transmitter (113) is arranged to transmit messages according to a carrier sense multiple access scheme.

**10.** A network device (110) according to any preceding claim, wherein the transmitter (113) is arranged to transmit messages according to the 802.11 standard.

**11.** A method for selecting a transmit rate for transmitting over a communication channel, the method comprising transmitting messages over a communication channel; determining a number of transmit failures over the communication channel based on a number of messages received in acknowledgement of the messages transmitted over the communication channel; **characterised by** determining a probability of collision over the communication channel; deriving a number of transmit failures over the communication channel resulting from communication channel link quality based on the determined number of transmit failures and the probability of collision over the communication channel; and selecting a transmit rate over the communication channel based on the derived number of transmit failures over the communication channel resulting from communication channel link quality.

Fig. 1

European Patent
Office

**EUROPEAN SEARCH REPORT**

Application Number

EP 05 25 4550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 513 281 A (MOTOROLA INC) 9 March 2005 (2005-03-09) * the whole document * ----- | 1-11 | H04L12/56 H04L12/28 H04L1/20 |
|  |  |  | TECHNICAL FIELDS SEARCHED (IPC) |
|  |  |  | H04L |

The present search report has been drawn up for all claims

| Place of search | Date of completion of the search | Examiner |
|---|---|---|
| Berlin | 30 November 2005 | Siebel, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 05 25 4550

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2005

| Patent document cited in search report | Publication date | Patent family member(s) | Publication date |
|---|---|---|---|
| EP 1513281 A | 09-03-2005 | NONE | |

EPO FORM P0459